# EUROPEAN PATENT SPECIFICATION

(11) **EP 2 701 139 B1**
(45) Date of publication and mention of the grant of the patent: **02.05.2018**
(21) Application number: 11865909.3
(22) Date of filing: 17.05.2011
(51) Int. Cl.: E01F 9/582

(54) **LIGHT-EMITTING DEVICE AND BLOCK FOR LIGHT-EMITTING DEVICE**
LICHTEMITTIERENDE VORRICHTUNG SOWIE BLOCK FÜR DIE LICHTEMITTIERENDE VORRICHTUNG
DISPOSITIF ÉLECTROLUMINESCENT ET BLOC POUR DISPOSITIF ÉLECTROLUMINESCENT

(43) Date of publication of application: 26.02.2014
(73) Proprietor: Pioneer Corporation, Tokyo 113-0021 (JP)
(72) Inventor: TAKAHASHI, Yasuhiro, Kawasaki-shi Kanagawa 212-0031 (JP)
(74) Representative: Manitz Finsterwald Patentanwälte PartmbB
(86) International application number: PCT/JP2011/061306
(87) International publication number: WO 2012/157075

(56) References cited:
- EP-A1- 2 214 455
- JP-A- 10 133 604
- JP-A- 10 188 625
- JP-A- 2000 010 512
- JP-A- 2001 015 264
- JP-A- 2001 081 743
- JP-A- 2001 109 413
- JP-A- 2002 069 913
- US-A- 4 080 085
- US-A- 4 993 868
- US-A1- 2004 226 601
- US-A1- 2009 094 734

## Description

The present invention relates to a light-emitting device and particularly to a light-emitting device equipped with an organic EL (Electro Luminescence) element and to a light-emitting device block.

In summer, the daytime temperature is high, and many night outdoor events such as fireworks displays, festivals, and night outdoor concerts take place. Many people gather in the site of such a night outdoor event, and the site is crowded with the people. Since these events take place at night, street lights and light-emitting signs are necessary to guide the people to their destination safely.

One example of conventional on-road light-emitting devices is disclosed in Patent Literature 1. This is a road sign display device including a thin-film light-emitting body and a protective sheet.

Patent Literature 2 discloses a road sign including a circuit that has a solar battery, an electric double layer capacitor, and LED elements.

### PRIOR ART REFERENCES:

Patent Literature 1: Japanese Patent Application Publication (Kokai) No. 2004-270443
Patent Literature 2: Japanese Patent Application Publication No. 2006-274685
Patent Literature 3: US Patent Application US 2004/0226601 A1 discloses a light-emitting device block according to the preamble of claim 1.

In the sign display device disclosed in Patent Literature 1, electric power must be supplied to the light-emitting body from a pre-installed separate power supply unit through a buried cable. Therefore, the sign display device is, for example, not relocatable and its installation place is limited.
The display device shown in Patent Literature 2 has a thick shape. Therefore, the display device must be buried in a road so as not to obstruct the traffic of people and vehicles. This display device has a problem such as "not relocatable."
The present invention has been made in view of the above-described problems, and an object of the present invention is to provide a portable and relocatable light-emitting device that can be used, for example, in an outdoor location with no power source facility.

An invention according to claim 1 includes: a flexible light-emitting unit (11), a flexible power generation unit (13), and a light-transmitting flexible sealing sheet (57),wherein the flexible light-emitting unit (11) includes a pair of input terminals; the flexible power generation unit (13) includes a pair of output terminals and is adapted for generating electromotive force by being irradiated with light; the flexible sealing sheet (57) is adapted for holding the flexible light-emitting unit (11) and the flexible power generation unit (13) side by side and sealing by self both of the flexible light-emitting unit (11) and the flexible power generation unit (13); the light-emitting device block (50) further comprises: a pair of first input connectors (55A) connected to the pair of input terminals and disposed at an edge part of the sealing sheet (57); and a pair of second input connectors (55B) connected to the pair of input terminals and disposed at another edge part of the sealing sheet (57).

### DESCRIPTION OF THE DRAWINGS

FIG. 1A is a plan view of a light-emitting device according to Embodiment 1.
FIG. 1B is a cross-sectional view of the light-emitting device according to Embodiment 1.
FIG. 1C is another cross-sectional view of the light-emitting device according to Embodiment.
FIG. 1D shows an equivalent circuit diagram of the light-emitting device according to Embodiment 1.
FIG. 2A illustrates a layer structure of a light-emitting element used in the light-emitting device.
FIG. 2B illustrates a layer structure of a solar battery used in the light-emitting device.
FIG. 3 illustrates installation of the light-emitting device.
FIG. 4A illustrates a light-emitting device block according to Embodiment 2 of the present invention.
FIG. 4B is an equivalent circuit diagram of the light-emitting device block according to Embodiment 2 of the present invention.
FIG. 5A illustrates a light-emitting device formed from the light-emitting device blocks according to Embodiment 2 of the present invention.
FIG. 5B is an equivalent circuit diagram of the light-emitting device formed from the light-emitting device blocks according to Embodiment 2 of the present invention.
FIG. 6 illustrates a modified embodiment of the present invention.

### Embodiment 1

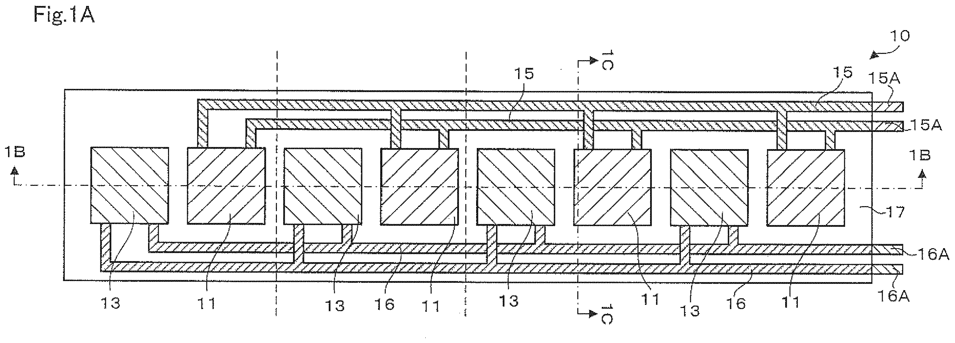

A light-emitting device 10 according to a first embodiment not corresponding to the invention will be described with reference to FIGs. 1A to 1D. FIG. 1A is a plan view of the light-emitting device 10 according to the first embodiment as viewed from a light-emitting surface side.

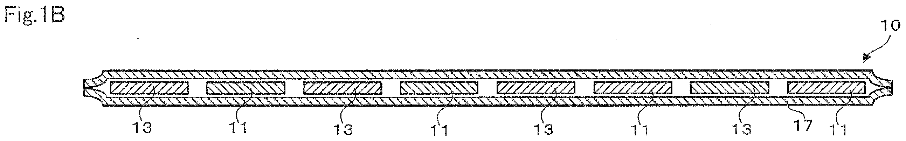

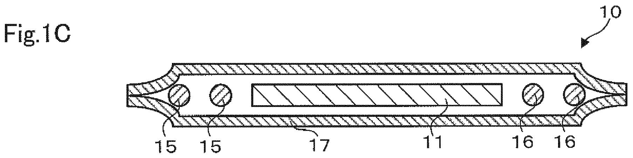

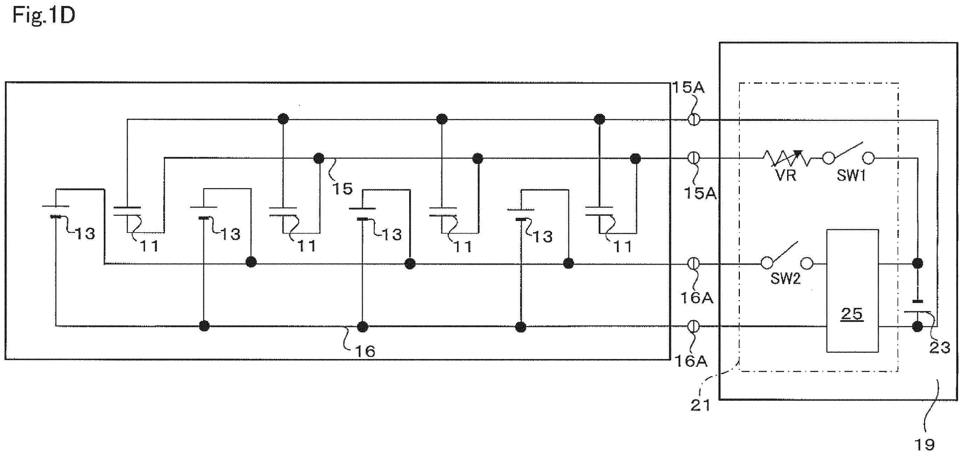

FIG. 1B is a cross-sectional view taken along the line 1B-1B in FIG. 1A. FIG. 1C is a cross-sectional view taken along the line 1C-1C in FIG. 1A. FIG. 1D is an equivalent circuit diagram of the light-emitting device 10.
Light-emitting units 11 are flat light-emitting panels. Each light-emitting unit 11 has a rectangular shape when viewed from the top, and includes a flexible organic EL (electroluminescence) light-emitting element that emits light when electric power is supplied thereto. The light-emitting units 11 are arranged in a row at regular intervals, and power generation units 13 are disposed between the respective light-emitting units 11.

Each power generation unit 13 is a flat power generation panel and has a rectangular shape when viewed from the top. The power generation unit 13 includes a flexible thin-film amorphous silicon solar battery panel that generates electromotive force when irradiated with light such as sunlight. In the light-emitting device 10, four light-emitting units 11 and four power generation units 13 are alternately arranged in a plane in a row. The light-emitting surfaces of the light-emitting units 11 and the light-receiving surfaces of the power generation units 13 are formed on one side of the light-emitting device 10.

Leads 15 which serve as a first conduction path for supplying electric power to the light-emitting units 11 are flexible and leads 16 which serve as a second conduction path for collecting electric power generated by the power generation units 13 are flexible. The leads 15 connect the light-emitting units 11 in parallel, and the leads 16 connect the power generation units 13 in parallel. Connectors 15A and 16A for connection with an external device are formed at ends of the leads 15 and 16.

The light-emitting units 11, the power generation units 13, and the leads 15 and 16 are entirely sealed by a flexible band-shaped light-transmitting sealing sheet 17. The sealing sheet 17 includes two sealing sheet elements (front and rear sheets) made of, for example, vinyl chloride, polyethylene or polypropylene, and the circumferential edge parts of these sheets are bonded with an adhesive or by thermocompression bonding. Alternatively, a bag-shaped sheet having an unsealed circumferential edge part may be used. The unsealed circumferential edge part is bonded to seal the light-emitting units 11, the power generation units 13, and the leads 15 and 16. The connectors 15A and 16A are exposed from the sealing sheet 17 for connection to the outside.

As described above, the light-emitting device has a generally flat shape in which the flat light-emitting units 11 and the flat power generation units 13 are arranged side by side and enclosed by the sealing sheet 17(enclosed inside the sealing sheet 17). Therefore, the light-emitting device can be placed on, for example, a road without obstructing the traffic of people and vehicles.

As shown in FIG. 1D, the leads 15 and 16 can be connected to a power supply 19 through the connectors 15A and 16A. The power supply 19 includes a charge-discharge control circuit 21 and a rechargeable unit 23 (e.g., a rechargeable battery such as a lithium ion battery or a capacitor such as an electric double layer capacitor), and the light-emitting device 10 is connected to the rechargeable unit 23 through the charge-discharge control circuit 21.

The charge-discharge control circuit 21 includes a first switch SW1 for switching the supply of current to the light-emitting units 11 between on and off, a switch SW2 for switching the current generation by the power generation units 13 between on and off, a variable resistor VR for controlling the supply of the current to the light-emitting units 11, and a voltage regulator 25 for controlling the feeding of the voltage from the power generation units 13 to the rechargeable unit 23. The resistance value of the variable resistor VR can be controlled through, for example, a knob disposed outside the device, and therefore it is possible to control an amount of light to be emitted from the light-emitting units 11 when the light-emitting units 11 are driven by the power received from the rechargeable unit 23. The voltage regulator 25 is configured to control the voltage to be introduced to the rechargeable unit 23 when the rechargeable unit 23 is charged using the power generation units 13. Specifically, the voltage regulator 25 performs the voltage control such that the rechargeable unit 23 is charged efficiently without overcharge even if, for example, the electromotive force of the solar batteries changes with the intensity of sunlight.

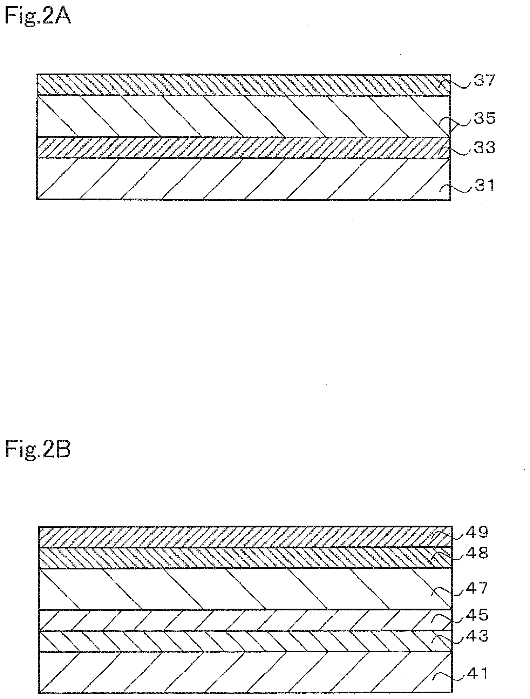

FIG. 2A shows the layer structure of the organic EL element used for the light-emitting units 11 of the light-emitting device 10, and FIG. 2B shows the layer structure of the solar battery used for the power generation units 13 of the light-emitting device 10.

The organic EL element used for the light-emitting units 11 includes, as a substrate, a flexible plastic film layer 31 such as a polyethylene terephthalate (PET) or polycarbonate (PC) layer. A metal electrode 33 such as an aluminum, silver, or magnesium electrode is formed on the film layer 31. An organic light-emitting layer 35 is stacked on the metal electrode 33, and a transparent electrode 37 such as an ITO (tin-doped indium oxide) electrode is formed on the organic light-emitting layer 35.

The solar battery used for the power generation units 13 includes, as a substrate, a flexible film 41 such as a polyethylene terephthalate (PET) or polyethylene naphthalate (PEN) film. A metal electrode 43 (e.g., an aluminum, silver, or magnesium electrode), an n-type amorphous silicon layer 45, an i-type amorphous silicon layer 47, and a p-type amorphous silicon layer 48 are stacked on the film layer 41. A transparent electrode 49 such as an ITO electrode is formed as the uppermost layer.

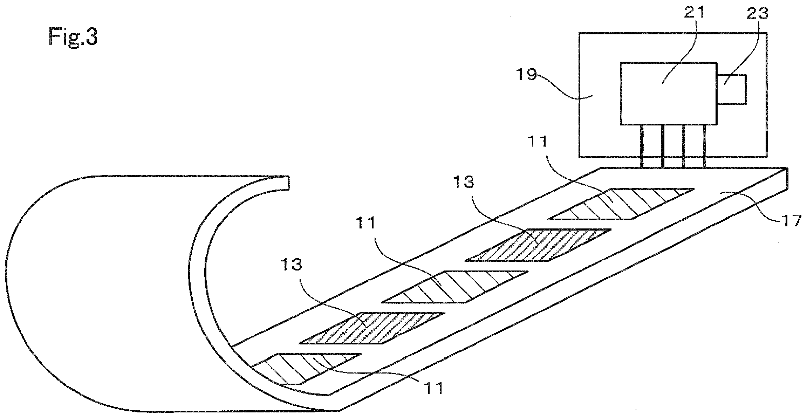

FIG. 3 shows use of the light-emitting device 10 according to the first embodiment.

As shown in FIG. 3, the light-emitting device 10 in a rolled (or folded) form is unrolled (or unfolded) and laid on a road with the light-emitting surfaces of the light-emitting units 11 up and the light-receiving surfaces of the power generation units 13 up. The leads 15 and 16 are connected to the power supply 19 through the connectors 15A and 16A at their ends. During the daytime, the light-emitting device 10 is irradiated with sunlight, and the amorphous silicon solar batteries in the power generation units 13 receive the sunlight. As a result, the power generation units 13 generate electric power. The electric power generated by the power generation units 13 is stored in the rechargeable unit 23 through the charge-discharge control circuit 21 connected to the leads 16 and the connectors 16A. This is a charge mode.

During the night, electric power is supplied from the rechargeable unit 23 to the light-emitting units 11 through the charge-discharge control circuit 21 and the leads 15, and the light-emitting units 11 emit light. This is a light-emission mode.

The light-emitting device includes: at least one flexible light-emitting unit that emits light upon receiving electric power; at least one flexible power generation unit that generates electromotive force when irradiated with light; a first conduction path connected to the light-emitting unit to supply electric power to the light-emitting unit; a second conduction path connected to the power generation unit to collect electric power generated by the power generation unit; and a flexible sealing sheet for sealing the light-emitting unit, the power generation unit, the first conduction path, and the second conduction path. With the above-described configuration, for example, the electric power generated by the power generation unit during the daytime is stored in the light-emitting device, and the stored electric power is used to cause the light-emitting unit to emit light during the night. Accordingly, the light-emitting device can operate even in a place with no power source facility. Since the light-emitting device as a whole is flexible, the light-emitting device can be placed on, for example, an uneven road in an easy manner. In addition, the light-emitting device can be rolled, folded and/or bent, so that it can be easily carried and relocated. Therefore, for example, even in a dark place such as the site of a night outdoor event with no power source facility, it is possible to guide people safely with the light emitted from the light-emitting devices by placing the light-emitting devices along a route in the dark place.

### Embodiment 2

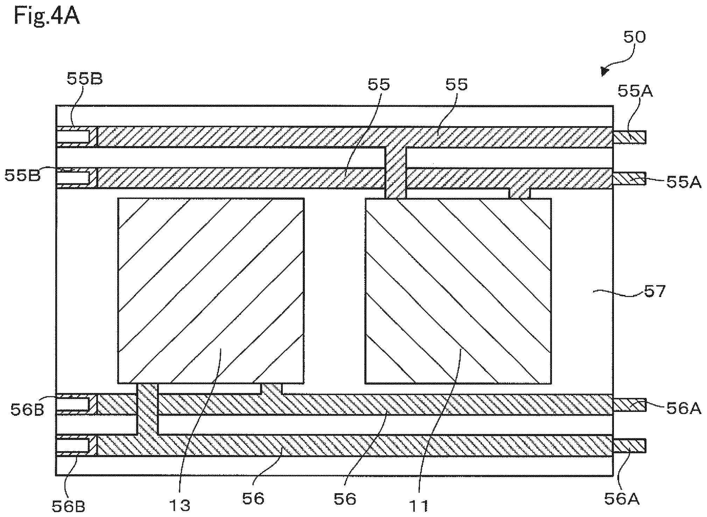

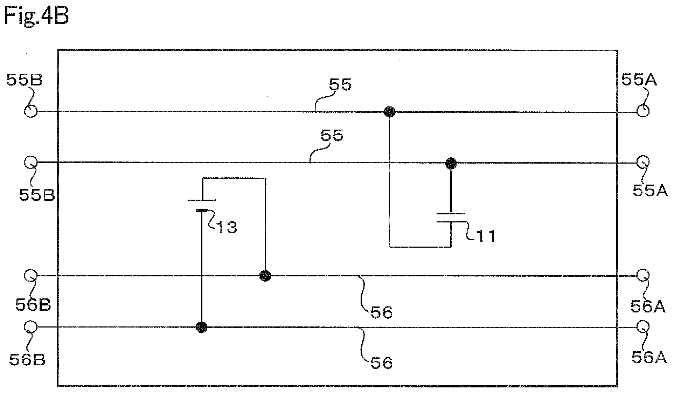

A light-emitting device block 50 according to the present invention will be described with reference to FIGs. 4A and 4B. FIG. 4A is a plan view of a block 50 for the light-emitting device according to the first embodiment of the present invention as viewed from the light-emitting surface side. FIG. 4B is an equivalent circuit diagram of the light-emitting device block 50.

The light-emitting device block 50 is a unit block of the light-emitting device 10 shown in FIG. 1A that corresponds to a section sandwiched between the broken lines. More specifically, as shown in FIGs. 4A and 4B, the light-emitting device block 50 includes one light-emitting unit 11 and one power generation unit 13 that are the same as those used in the light-emitting device 10 of the first embodiment. A pair of first leads 55 is connected to a pair of input terminals of the light-emitting unit 11. A second pair of leads 56 is connected to a pair of output terminals of the power generation unit 13.

The light-emitting unit 11, the power generation unit 13, and the leads 55 and 56 are sealed by a flexible light-transmitting sealing sheet 57 similar to that used in the light-emitting device 10.

At one edge part of the sealing sheet 57, a pair of first input connectors 55A connected to the pair of first leads 55 and a pair of first output connectors 56A connected to the pair of second leads 56 are provided at end portions of the leads 55 and 56. At an opposite edge part of the sealing sheet 57, a pair of second input connectors 55B connected to the pair of first leads 55 and a pair of second output connectors 56B connected to the pair of second leads 56 are formed at the other end portions of the leads 55 and 56. The connectors 55A and 56A are male connectors protruding toward the outside of the light-emitting device block 50. The connectors 55B and 56B are female connectors formed into a concave shape recessed toward the inside of the light-emitting device block 50. The leads 55 and 56 are configured such that, when the connectors 55A and the connectors 56A of the light-emitting device block 50 are connected to the connectors 55B and the connectors 56B of another light-emitting device block 50, the light-emitting units 11 are connected in parallel and the power generation units 13 are connected in parallel.

The connectors 55A, 55B, 56A, and 56B are exposed from the sealing sheet 57 so as to be connected to an external device and/or another light-emitting device 50.

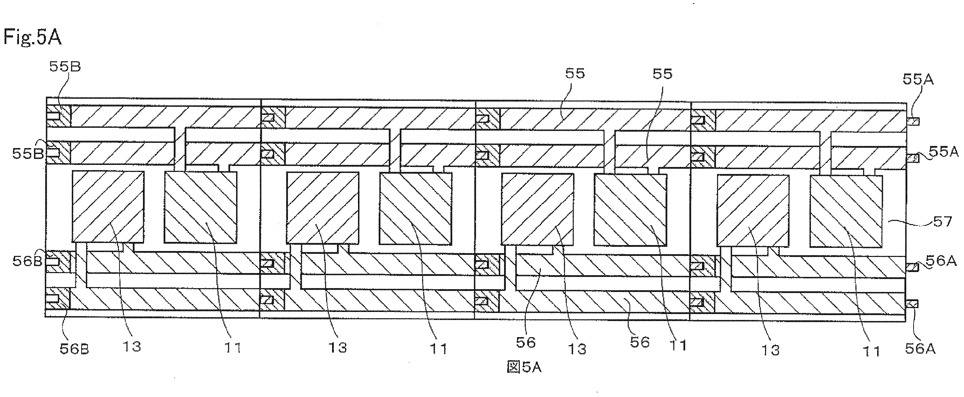

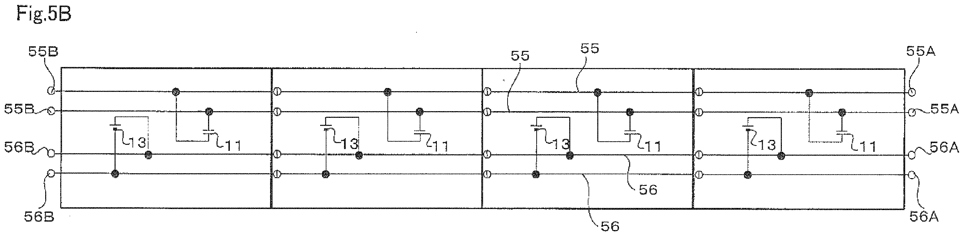

FIG. 5A shows a light-emitting device formed by connecting light-emitting device blocks 50. FIG. 5B shows an equivalent circuit diagram of this light-emitting device. As shown above, by inserting the connectors 55A and 56A into the connectors 55B and 56B to connect them and arranging the joined light-emitting device blocks 50 with no gap therebetween, a light-emitting device including the desired number of blocks can be formed. A module (not shown) including a charge-discharge control circuit and a rechargeable unit is connected to the connectors 55A and 56A or the connectors 55B and 56B.

Each light-emitting device block 50 includes one light-emitting unit and one power generation unit in the illustrated embodiment. However, the light-emitting device block 50 may have other configurations. For example, each light-emitting device block may include two light-emitting units and one power generation unit or may include two light-emitting units and two power generation units.

The light-emitting device block of the present invention includes: at least one flexible light-emitting unit that includes a pair of input terminals and emits light when a driving voltage is supplied to the pair of input terminals; at least one flexible power generation unit that includes a pair of output terminals and generates electromotive force between the pair of output terminals when irradiated with light; a light-transmitting flexible sealing sheet that holds the light-emitting unit and the power generation unit side by side and seals the light-emitting unit and the power generation unit; a pair of first input connectors connected to the pair of input terminals and disposed at one edge part of the sealing sheet, and a pair of first output connectors connected to the pair of output terminals and disposed at the one edge part; and a pair of second input connectors connected to the pair of input terminals and disposed at an opposite edge part of the sealing sheet, and a pair of second output connectors connected to the pair of output terminals and disposed at the opposite edge part. The light-emitting device block having the above-described configuration can store, for example, the electric power generated by the power generation unit during the daytime, and can cause the light-emitting unit to emit light during the night using the stored electric power. Thus, the light-emitting device block can operate even in a place with no power source facility. Since the light-emitting device block as a whole is flexible, it can be placed on, for example, an uneven road. The light-emitting device block is rollable or foldable, so that it can be easily carried and relocated. The light-emitting device may include a desired number of blocks. Although the light-emitting units 11 are connected in parallel, and the power generation units 13 are also connected in parallel in the above-described embodiments, these units may be connected in series as needed.

It should be noted that the charge-discharge control circuit 21 and the rechargeable unit 23 may be sealed within the sealing sheet 17 of the light-emitting device and integrated with the light-emitting device. By integrating the charge-discharge control circuit and the rechargeable unit with the light-emitting device, the light-emitting device can be laid without, for example, the need for connection with any external device, so that the easiness of installation and portability are further improved.

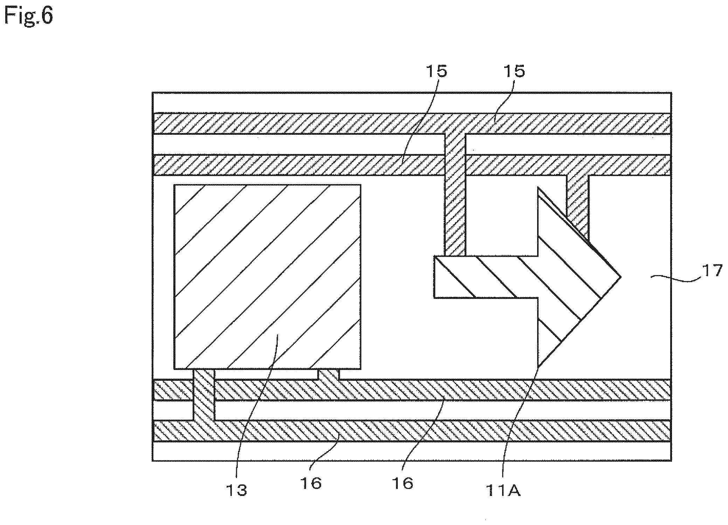

It should also be noted that a lighting display in a shape other than a rectangle may be achieved by using a light-emitting unit 11 formed into a shape other than a rectangle or by covering a part of the light-emitting surface of the light-emitting unit 11 with, for example, a light-shielding film. Various signs may be formed by shaping the light-emitting unit into, for example, an arrow shape or the shape of a numeral, or covering the light-emitting unit with a light-shielding sheet so that an arrow and/or a numeral is exposed and displayed. One example of such sign is a light-emitting unit 11A shown in FIG. 6.

Although the light-emitting units 11 are organic EL elements, and the power generation units 13 are amorphous silicon solar batteries in the above-described embodiments, any flexible light-emitting body such as an inorganic EL element may be used for the light-emitting units 11, and any flexible power generation body may be used for the power generation units 13. Examples of the power generation body usable for the power generation units 13 include: microcrystalline silicon-type solar batteries; compound-based solar batteries such as CIS-based and CIGS-based solar batteries and CdTe-type solar batteries; and organic-based solar batteries such as organic thin-film solar batteries.

Various materials, configurations, shapes, etc. in the above-described embodiments are only examples, and appropriate materials, configurations, shapes, etc. may be selected according to the intended application and/or other conditions.

### REFERENCE NUMERALS AND SYMBOLS

- 10: Light-emitting device
- 11, 11A: Light-emitting unit
- 13: Power generation unit
- 15, 16: Lead
- 15A, 16A: Connector
- 17: Sealing sheet
- 19: Power supply
- 21: Charge-discharge control circuit
- 23: Rechargeable unit
- 25: Voltage regulator
- 50: Light-emitting device block
- 55, 56: Lead
- 55A, 55B, 56A, 56B: Connector
- SW1, SW2: Switch
- VR: Variable resistor

## Claims

1. A light-emitting device block (50) comprising:
a flexible light-emitting unit (11),
a flexible power generation unit (13), and
a light-transmitting flexible sealing sheet (57),
**characterized in that**
the flexible light-emitting unit (11) includes a pair of input terminals;
the flexible power generation unit (13) includes a pair of output terminals and is adapted for generating electromotive force by being irradiated with light;
the flexible sealing sheet (57) is adapted for holding the flexible light-emitting unit (11) and the flexible power generation unit (13) side by side and sealing by self both of the flexible light-emitting unit (11) and the flexible power generation unit (13);
the light-emitting device block (50) further comprises:
a pair of first input connectors (55A) connected to the pair of input terminals and disposed at an edge part of the sealing sheet (57); and
a pair of second input connectors (55B) connected to the pair of input terminals and disposed at another edge part of the sealing sheet (57);
a pair of first output connectors (56A) connected to the pair of output terminals and disposed at the edge part of the sealing sheet (57); and
a pair of second output connectors (56B) connected to the pair of output terminals and disposed at the another edge part of the sealing sheet (57).

2. The light-emitting device block (50) according to claim 1, wherein the pair of first input connectors (55A) and the pair of first output connectors (56A) are connectable to the pair of second input connectors (55B) and the pair of second out put connectors (56B), respectively.

3. The light-emitting device block (50) according to claim 1 or 2, wherein the light-emitting unit (11) has a flat shape, and the power generation unit (13) has a flat shape.

4. The light-emitting device block (50) according to any one of claims 1 to 3, wherein the light-emitting unit (11) has a sign shape.

5. The light-emitting device block (50) according to any one of claims 1 to 4, comprising a light-shielding sheet that has a sign shape and covers a part of the light-emitting unit (11).

6. The light-emitting device block (50) according to any one of claims 1 to 5, wherein the light-emitting unit (11) includes an organic electroluminescence element.

7. The light-emitting device block (50) according to any one of claims 1 to 6, wherein the power generation unit (13) includes a thin-film solar battery.

## Patentansprüche

1. Block (50) für eine lichtemittierende Vorrichtung, umfassend:
eine flexible lichtemittierende Einheit (11),
eine flexible Stromerzeugungseinheit (13), und
eine Licht übertragende flexible Abdichtplatte (57),
**dadurch gekennzeichnet, dass**
die flexible lichtemittierende Einheit (11) ein Paar von Eingangsanschlüssen enthält;
die flexible Stromerzeugungseinheit (13) ein Paar von Ausgangsanschlüssen enthält und angepasst ist, um bei Bestrahlung mit Licht eine elektromotorische Kraft zu erzeugen;
die flexible Abdichtplatte (57) angepasst ist, um die flexible lichtemittierende Einheit (11) und die flexible Stromerzeugungseinheit (13) nebeneinander festzuhalten und um sowohl die flexible lichtemittierende Einheit (11) als auch die flexible Stromerzeugungseinheit (13) von sich aus abzudichten;
wobei der Block (50) für eine lichtemittierende Vorrichtung ferner umfasst:
ein Paar erster Eingangsverbinder (55A), die mit dem Paar von Eingangsanschlüssen verbunden sind und an einem Randabschnitt der Abdichtplatte (57) angeordnet sind; und
ein Paar zweiter Eingangsverbinder (55B), die mit dem Paar von Eingangsanschlüssen verbunden sind und an einem anderen Randabschnitt der Abdichtplatte (57) angeordnet sind;
ein Paar erster Ausgangsverbinder (56A), die mit dem Paar von Ausgangsanschlüssen verbunden sind und an dem Randabschnitt der Abdichtplatte (57) angeordnet sind; und
ein Paar zweiter Ausgangsverbinder (56B), die mit dem Paar von Ausgangsanschlüssen verbunden sind und an dem anderen Randabschnitt der Abdichtplatte (57) angeordnet sind.

2. Block (50) für eine lichtemittierende Vorrichtung nach Anspruch 1,
wobei das Paar erster Eingangsverbinder (55A) und das Paar erster Ausgangsverbinder (56A) jeweils mit dem Paar zweiter Eingangsverbinder (55B) und dem Paar zweiter Ausgangsverbinder (56B) verbindbar sind.

3. Block (50) für eine lichtemittierende Vorrichtung nach Anspruch 1 oder 2,
wobei die lichtemittierende Einheit (11) eine flache Gestalt aufweist und die Stromerzeugungseinheit (13) eine flache Gestalt aufweist.

4. Block (50) für eine lichtemittierende Vorrichtung nach einem der Ansprüche 1 bis 3,
wobei die lichtemittierende Einheit (11) eine Symbolgestalt aufweist.

5. Block (50) für eine lichtemittierende Vorrichtung nach einem der Ansprüche 1 bis 4,
der eine Lichtabschirmplatte umfasst, die eine Symbolgestalt aufweist und einen Teil der lichtemittierenden Einheit (11) abdeckt.

6. Block (50) für eine lichtemittierende Vorrichtung nach einem der Ansprüche 1 bis 5,
wobei die lichtemittierende Einheit (11) ein organisches Elektrolumineszenz-Element enthält.

7. Block (50) für eine lichtemittierende Vorrichtung nach einem der Ansprüche 1 bis 6,
wobei die Stromerzeugungseinheit (13) eine Dünnfilm-Solarbatterie enthält.

## Revendications

1. Bloc à dispositif électroluminescent (50) comprenant:
une unité électroluminescente flexible (11),
une unité de génération d'énergie flexible (13), et
une feuille d'étanchement flexible transmettant la lumière (57),
**caractérisé en ce que**
l'unité électroluminescente flexible (11) inclut une paire de bornes d'entrée;
l'unité de génération d'énergie flexible (13) inclut une paire de bornes de sortie et est adapté pour générer une force électromotrice en étant irradiée avec de la lumière;
la feuille d'étanchement flexible (57) est adaptée pour maintenir l'unité électroluminescente flexible (11) et l'unité de génération d'énergie flexible (13) côte à côte et pour étancher par elle-même à la fois l'unité électroluminescente flexible (11) et l'unité de génération d'énergie flexible (13);
le bloc à dispositif électroluminescent (50) comprend en outre:
une paire de premiers connecteurs d'entrée (55A) connectés à la paire de bornes d'entrée et disposés au niveau d'une partie de bordure de la feuille d'étanchement (57) ; et
une paire de seconds connecteurs d'entrée (55B) connectés à la paire de bornes d'entrée et disposés au niveau d'une autre partie de bordure de la feuille d'étanchement (57) ;
une paire de premiers connecteurs de sortie (56A) connectés à la paire de bornes de sortie et disposés au niveau de la partie de bordure de la feuille d'étanchement (57) ; et
une paire de seconds connecteurs de sortie (56B) connectés à la paire de bornes de sortie et disposés au niveau de l'autre partie de bordure de la feuille d'étanchement (57).

2. Bloc à dispositif électroluminescent (50) selon la revendication 1, dans lequel la paire de premiers connecteurs d'entrée (55A) et la paire de premiers connecteurs de sortie (56A) sont susceptibles d'être connectés à la paire de seconds connecteurs d'entrée (55B) et à la paire de seconds connecteurs de sortie (56B), respectivement.

3. Bloc à dispositif électroluminescent (50) selon la revendication 1 ou 2, dans lequel l'unité électroluminescente (11) a une forme plane, et l'unité de génération d'énergie (13) a une forme plane.

4. Bloc à dispositif électroluminescent (50) selon l'une quelconque des revendications 1 à 3, dans lequel l'unité électroluminescente (11) a la forme d'un signe.

5. Bloc à dispositif électroluminescent (50) selon l'une quelconque des revendications 1 à 4, comprenant une feuille formant écran à la lumière, qui a la forme d'un signe et qui couvre une partie de l'unité électroluminescente (11).

6. Bloc à dispositif électroluminescent (50) selon l'une quelconque des revendications 1 à 5, dans lequel l'unité électroluminescente (11) inclut un élément électroluminescent organique.

7. Bloc à dispositif électroluminescent (50) selon l'une quelconque des revendications 1 à 6, dans lequel l'unité de génération d'énergie (13) inclut une batterie solaire à film mince.
